# EUROPEAN PATENT SPECIFICATION

(11) **EP 3 504 078 B1**
(45) Date of publication and mention of the grant of the patent: **16.02.2022**
(21) Application number: 17772098.4
(22) Date of filing: 24.08.2017
(51) Int. Cl.: B60K 17/30, B62D 7/18

(54) **SINGLE-SUSPENDED-WHEEL-STEERING DRIVE SYSTEM**
ANTRIEBSSYSTEM FÜR LENKUNG MIT EINEM AUFGEHÄNGTEN RAD
SYSTÈME D'ENTRAÎNEMENT DE DIRECTION DE ROUE SUSPENDUE UNIQUE

(30) Priority: 26.08.2016 IT 201600087598
(43) Date of publication of application: 03.07.2019
(73) Proprietor: Same Deutz-Fahr Italia S.p.A., 24047 Treviglio Bergamo (IT)
(72) Inventor: HERAUDET, Laurent Jean-Charles, 24040 Calvenzano Bergamo (IT)
(74) Representative: Gamba, Alessandro
(86) International application number: PCT/IB2017/055099
(87) International publication number: WO 2018/037364

(56) References cited:
- EP-A1- 1 547 906
- EP-A1- 1 726 512
- DE-A1- 2 708 416
- DE-A1- 3 625 403
- FR-A1- 2 341 448

## Description

The object of the present invention is a single-suspended-wheel-steering drive system of a vehicle for agricultural use and the vehicle comprising it; in particular such vehicle is a tractor or, preferably, a garden tractor. Specifically, the vehicle for agricultural use has motion means comprising transmission means to which the single-suspended-wheel-steering drive system is connectable.

Preferably, in the present description, "single-suspended-wheel-steering drive system" refers to a system to which a suspension-type wheel group with independent wheels is connectable.

Furthermore, in the following description, the phrase "vehicles for agricultural use" refers to those vehicles typically suitable to move and operate on agricultural land; the term "tractor" means both agricultural tractors and, more in general, large machines, such as earth moving machines derived from agricultural tractors and, in general, specific machines for power operations, such as actions directly on the ground, such as plowing or the loading/unloading of agricultural material; the term "garden tractor" refers to that type of vehicle, typically compact in size, for example used in the viticulture, and therefore typically suitable to move in the space between two adjacent rows.

Currently known single-suspended-wheel-steering drive systems are suitable to support a wheel group on the vehicle, providing shock absorption and permitting steering. Such known systems are suitable to ensure efficient steering and effective shock absorption of the vehicle; moreover, the independence of the wheels on the ground is such as to deal with situations wherein only three wheels are on the ground while one is raised from it, that is the situation that typically occurs with rigid axle solutions.

Also known are single-suspended-wheel-steering drive system solutions of the drive type, that is equipped with a drive group connected to the vehicle's transmission means suitable to transfer the motion to the wheel group. Such solutions have a steering angle limited by the presence of the drive group and its features: the drive groups of such solutions comprise a constant velocity joint, and the steering angle of the system coincides with the working angle of said constant velocity joint.

The objective of this invention is to provide a single-suspended-wheel steering system that overcomes the aforementioned problem typical of the prior art by providing a single-suspended-wheel steering system capable of achieving steering angles greater than those achieved by the solutions of the known art. <see page 3a>

Such object is achieved by a single- suspended- wheel - steering drive system according to claim 1, and by a tractor or a garden tractor according to claim 12. The dependent claims describe further variants of preferred embodiments.

The features and advantages of the single-suspended-wheel -steering drive system according to the present invention will be apparent from the following description, provided by way of non- limiting example, in accordance with the accompanying figures, wherein:
- figure 1 shows a vehicle for agricultural use, in particular a garden tractor, comprising a single-suspended- wheel - steeri ng drive system object of the present invention;
- figure 2 shows a vertical sectional view of a single- suspended- wheel - steering drive system object of the present invention according to a preferred embodiment, wherein the wheel group to be supported is arranged in such a way as to direct the motion of the vehicle in a rect ilinear direct ion;
- figures 2a and 2b show a vertical sectional view of the single- suspended- wheel -steering drive system of figure 2, wherein the wheel group is subjected to a <Examples of known solutions of single-suspended wheelsteering drive systems, with the above mentioned problems, solved by the present invention, are disclosed in documents EP1726512A1, EP1547906A1, FR2341448A1 and DE2708416A1.> shaking of the shock absorber respectively downward and upward;
- figure 3 shows a top view of a portion of the single-suspended-wheel-steering drive system as shown in figures 2 and 2a, wherein the wheel group is arranged in a rectilinear configuration;
- figures 3a and 3b respectively show two views from the top of a portion of the single-suspended-wheel-steering drive system shown in figures 2 and 2a, wherein the wheel group is arranged in two distinct steering positions.

In accordance with the accompanying figures, an entire single-suspended-wheel-steering drive system of a vehicle 900 for agricultural use connected to a wheel group is indicated collectively with the reference number 1. Preferably, the vehicle 900 is a tractor. Preferably, the vehicle is a garden tractor.

The accompanying figures are not to be considered as limited to the embodiment of the wheel group represented; in fact, the single-suspended-wheel-steering drive system 1 is independent of the type of wheel group, tire or tires supported, e.g. dual wheels.

Preferably, the single-suspended-wheel-steering drive system 1 is at the front of the vehicle for agricultural use. In other words, the wheel group that the single-suspended-wheel-steering drive system supports is a front wheel group.

As shown in the following, the single-suspended-wheel-steering drive system is connected to the transmission means of the vehicle to transmit the motion to the ground through the respective wheel group. In the embodiment wherein the single-suspended-wheel steering drive system is in the front, it thus refers to vehicles that provide, directly or optionally, all-wheel-drive to four drive wheels.

In accordance with the accompanying figures, a vehicle for agricultural use in its entirety is indicated collectively with the reference number 900.

The vehicle 900 comprises motion means for its movement comprising an engine, for example, an internal combustion one, and transmission means for the transmission of motion from the engine to the wheel groups.

In addition, the vehicle comprises a steering axle 910 connectable to or comprising said transmission means; in other words, the steering axle 910 is driven. The axle 910 extends along an axle axis A-A, typically transverse, i.e. perpendicular to the longitudinal axis L-L of the tractor 900.

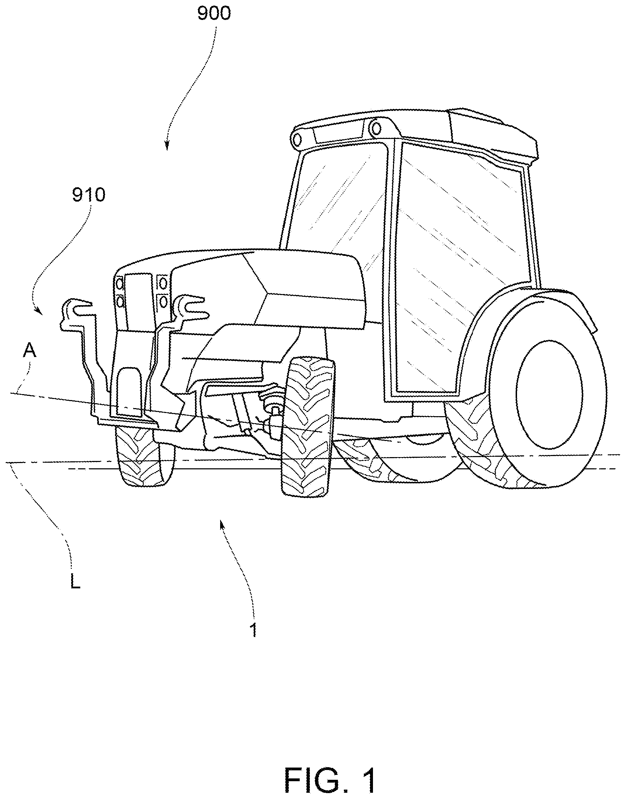

Preferably said steering axle 910 is the front axle of the tractor 900, as shown in figure 1.

The object of the present invention is a single-suspended-wheel-steering drive system 1 connectable to a wheel group of a vehicle 900.

The system 1 comprises a wheel carrier 2 for the wheel group, to which preferably the wheel group is solidly connected, for example by means of a plurality of screws.

The system 1 further comprises a shock absorber group 3 for the support and shock absorption of the wheel carrier 2.

In particular, the wheel carrier 2 is constrained in rotation to the shock absorber group 3 so that it is rotatable around a steering axis S-S. Preferably, the system 1 defines a steering angle γ, that is the angle of rotation of the wheel carrier 2 around the steering axis S-S starting from the rectilinear configuration, wherein the vehicle has a rectilinear motion parallel to the longitudinal axis L-L; that is to say, the wheel carrier group 2 is in a position aligned with the axle axis A-A. Preferably, starting from the rectilinear configuration, a steering angle γ in the clockwise direction and a steering angle γ in the counterclockwise direction is identified.

In a preferred embodiment, the shock absorber group 3 comprises at least one upper arm 31 and at least one lower arm 32 engaged in rotation to the wheel carrier 2 by means of an upper hinge 310 and a lower hinge 320. Preferably, the steering axis S-S passes through the centers of rotation of said upper hinge 310 and of said lower hinge 320.

According to a preferred embodiment, the wheel carrier 2 is specially shaped, for example comprising an upper slot and a lower slot specially designed to be engageable by the upper hinge 310 and the lower hinge 320 respectively. The present invention does not take into account the embodiment and the features, for example structural, of said upper hinge 310 and of the lower hinge 320.

According to a preferred embodiment, the single-suspended-wheel-steering drive system comprises a drive group 5 suitable to transmit the motion induced by the transmission means of the vehicle to the wheel group.

Preferably, the drive group 5 comprises a drive shaft 51 operatively connected to the transmission means of the vehicle and a rotation shaft 52 for the rotation of the wheel group.

Also, preferably, the drive group 5 comprises a constant velocity joint 55 through which the drive shaft 51 and the rotation shaft 52 are operatively connected for the mutual transmission of the rotational motion.

In accordance with a preferred embodiment, the constant velocity joint 55 is housed on the wheel carrier 2.

According to a preferred embodiment, the constant velocity joint 55 has a center of rotation Cr.

Preferably, the center of rotation Cr is offset distally from said steering axis S-S. In other words, along the axle axis A-A, the steering axis S-S is closer to the body of the vehicle than the center of rotation Cr of the constant velocity joint 55.

In accordance with a preferred embodiment, the center of rotation Cr of the constant velocity joint 55 and the steering axis S-S defines an offset distance D. Preferably, the offset distance D is measured along the axle axis A-A in a configuration wherein the wheel carrier 2 and hence the wheel group is not rotated, i.e. the vehicle is not steered, in other words in the rectilinear configuration.

Preferably, the offset distance D is greater than 5 millimeters.

Preferably, the offset distance D is between 20 and 50 millimeters, preferably between 20 and 30 millimeters; preferably the offset distance D is 25 millimeters.

According to a preferred embodiment, the constant velocity joint 55 has a working angle α substantially about 50° (e.g., between 45° and 55°, for example 52°); preferably, the working angle α is 50°.

In accordance with the foregoing, the center of rotation Cr is available in a series of angular positions with respect to the steering axis S-S; for example, the center of rotation Cr is positioned with respect to the steering axis S-S in a plurality of positions all lying on an imaginary circumference with the center on said steering axis S-S with the offset distance D as the radius.

Preferably, the system 1 defines a steering angle γ greater with respect to the working angle α; namely, the wheel carrier 2, and hence the wheel group mounted thereon, are suitable to rotate by a steering angle γ greater than the working angle α.

In other words, the steering angle γ is approximately 5° greater than the working angle α, for example 4° in a solution with an offset distance of 25 mm.

Preferably, the drive shaft 51 has a joint end 515 operatively connected to the constant velocity joint 55 and a sliding end 510 operatively connected to the transmission means.

According to the present invention, the drive group 5 comprises a transmission member 500, connectable to the transmission means, to which the sliding end 510 is operatively connected so as to be guided in rotation and supported in a predefined longitudinal sliding.

According to the present invention the transmission member 500 comprises a bell-shaped element 580 drivable in rotation by the transmission means, identifying a bell cavity 580' housing the sliding end and a carriage element 581 operatively connected to the sliding end 510 and the bell-shaped element 580.

According to the present invention the sliding end 510 is free to slide inside the carriage element 580. Preferably, depending on the movements of the wheel carrier 2, in fact, the drive shaft 51 is subject to longitudinal displacements, in particular the joint end 515 is fixed to the wheel carrier 2 while the sliding end 510 is instead movable longitudinally.

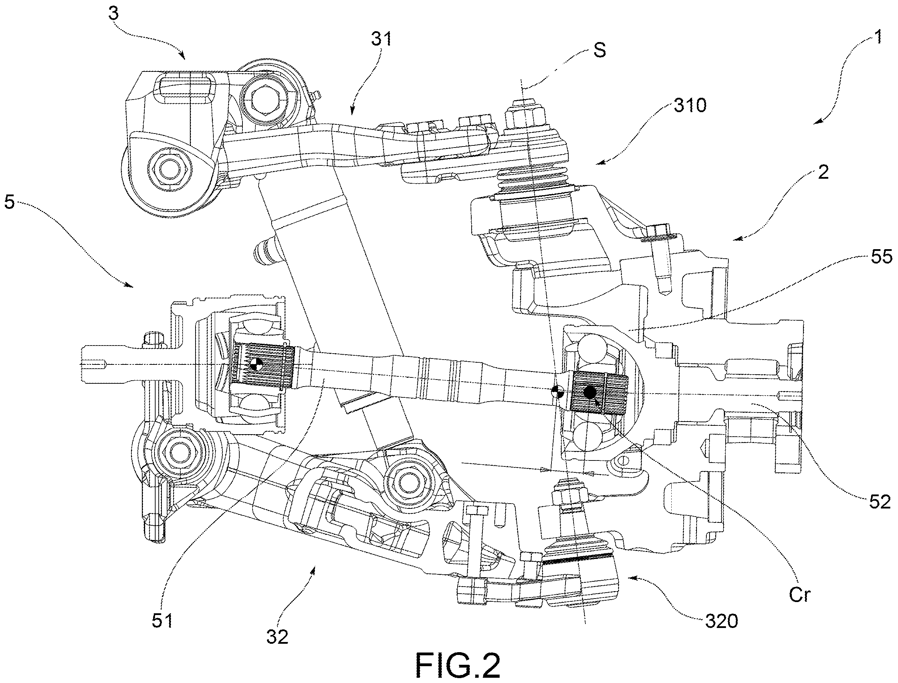

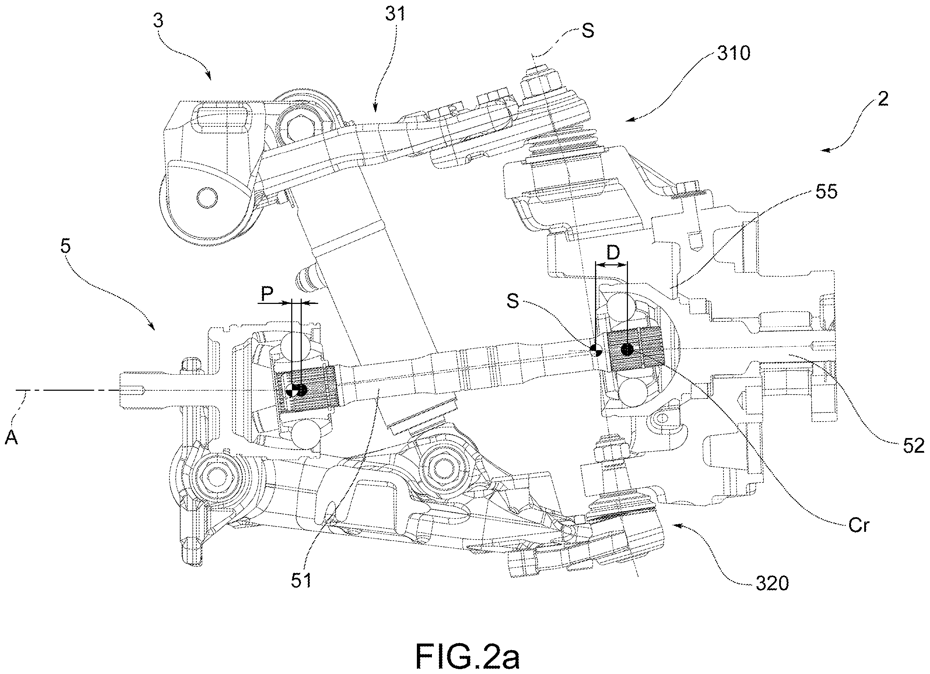

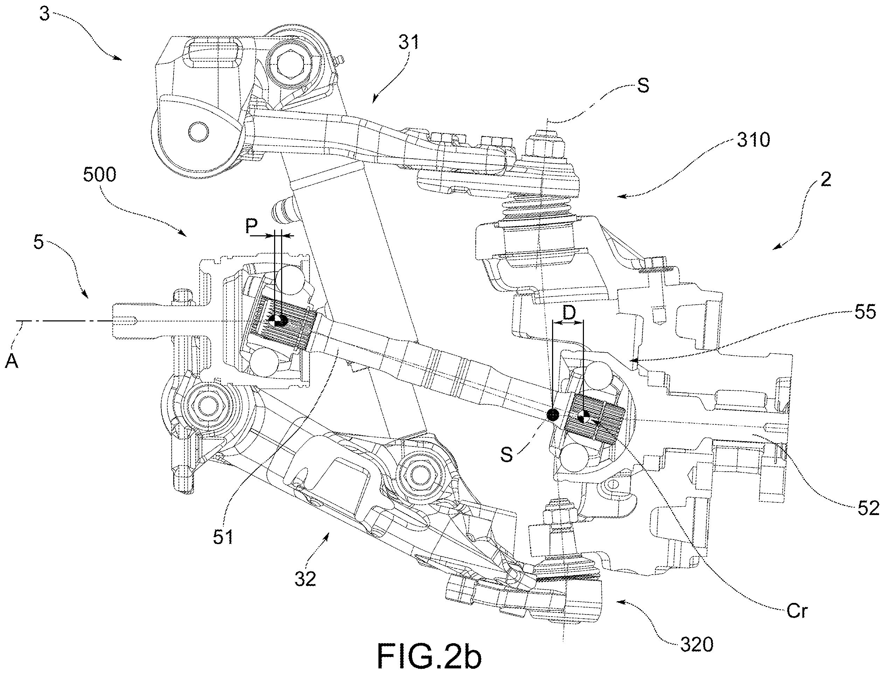

In other words, in a shock absorber configuration of the wheel group, the drive shaft 51 having the joint end 515 in an axial position has the sliding end 510. According to the present invention, the sliding end 510 translates longitudinally with respect to the bell-shaped element 580 by means of the carriage element 581 along a shock absorber stroke P. Preferably, said shock absorber stroke P extends to about 20 mm. In other words, the sliding end 510 runs a shock absorber stroke P of about 20 mm induced by the vertical movement of the wheel carrier 2 allowed by the shock absorber group 3 (as shown in figures 2a and 2b).

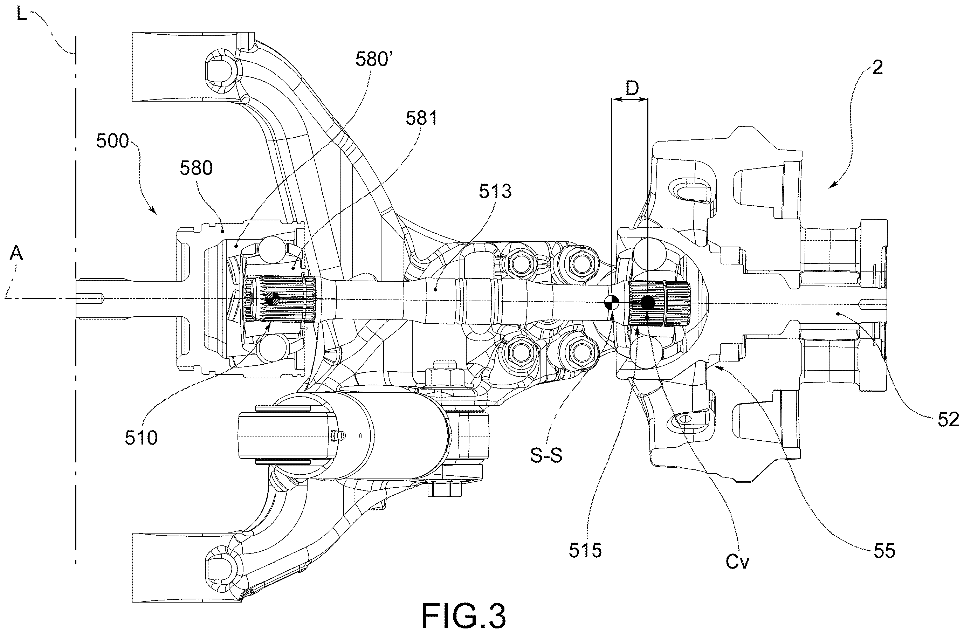

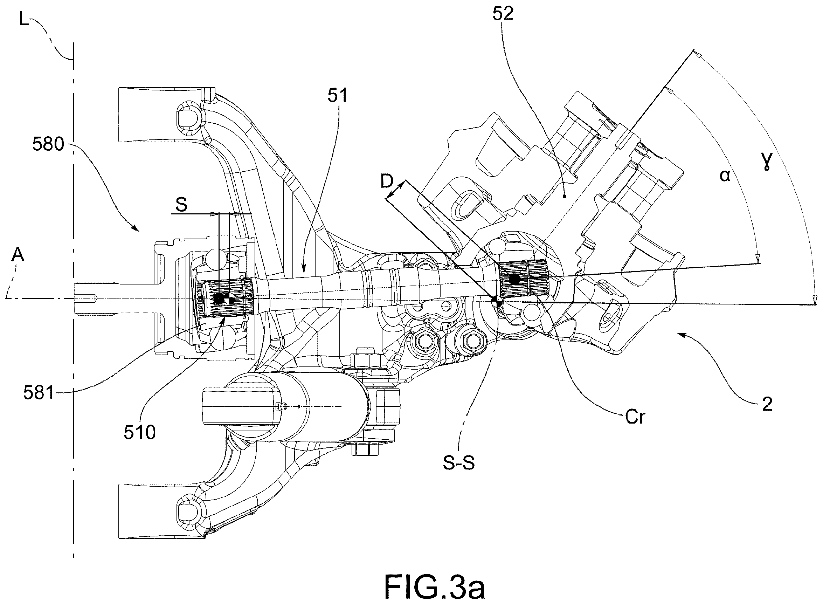

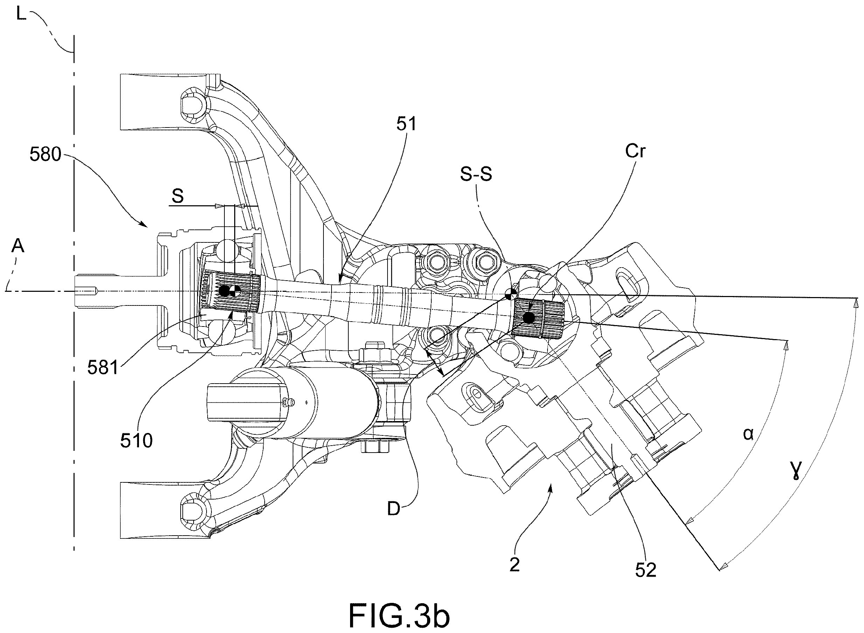

Furthermore, in a steering configuration of the wheel group, the motor shaft 51 having the joint end 515 in a fixed axial position has the sliding end 510 which translates longitudinally with respect to the bell-shaped element 580 by means of the long carriage element 581 along a steering stroke S. Preferably, said steering stroke extends to about 5 mm and preferably to 5 mm. In other words, the sliding end 510 travels a steering stroke S of approximately 5 mm induced by the rotation of the wheel carrier around the steering axis S-S (as shown in figures 3a and 3b).

In a preferred embodiment, said carriage element 581 is adapted to allow a longitudinal movement of the sliding end 510 to about 25 mm, a combination of the steering stroke S and the shock absorber stroke P.

Preferably, said carriage element 581 is of the "constant velocity carriage" type.

Innovatively, the single-suspended-wheel-steering drive system object of the present invention achieves the intended object of the invention, that is to provide a single-suspended-wheel-steering drive system with a greater steering angle with respect to the typical solutions of the state of the art.

Advantageously, the single-suspended-wheel-steering drive system object of the present invention is suitable to support, dampen and drive in rotation the wheel group connected thereto effectively.

Furthermore, advantageously, the single-suspended-wheel-steering drive system achieves greater steering angles with respect to those achievable by the known art solutions wherein the steering angle is equal to the working angle of the joint included therein, allowing the vehicle for agricultural use on which it is applied to be driven on curves with tighter radii.

Also, advantageously, the single-suspended-wheel-steering drive system is suitable to withstand effectively the actions sustained by the wheel group in its contact with the ground, such as the side forces induced by the wheel group driven in rotation.

Advantageously, the single-suspended-wheel-steering drive system is suitable for application on tractors, and in particular, finds extraordinary effects in solutions where it is applied to the front axles.

Also, advantageously, the single-suspended-wheel-steering drive system is suitable for application also on garden tractors, and in particular, it provides exceptional effects in solutions wherein it is applied to the front axles.

A further advantageous aspect lies in the fact that in applications where greater steering angles than the known ones are not required, in applying the single-suspended-wheel-steering drive system, constant velocity joints with lower working angles are usable. In other words, a further advantage lies in the fact that the solution object of the present invention is extremely versatile and thus customizable in such a way as to permit further evolutionary steps such as further sizing of the various components.

It is clear that one skilled in the art, in order to meet specific needs, may make changes to the wheel carrier group or the tractor described above, all contained within the scope of protection defined by the following claims.

## Claims

1. A single-suspended-wheel-steering drive system (1) connectable to a wheel group of a vehicle (900) for agricultural use wherein the vehicle has motion means comprising transmission means, wherein the system (1) comprises:
- a wheel carrier (2) for the wheel group;
- a shock absorber group (3) for the support and shock absorption of the wheel carrier (2), to which the wheel carrier (2) is constrained in rotation around a steering axis (S-S);
- a drive group (5) suitable to transmit the motion induced by the vehicle's transmission means to the wheel group comprising:
i) a drive shaft (51) operatively connected to the vehicle's transmission means;
ii) a rotation shaft (52) for the rotation of the wheel group;
iii) a constant velocity joint (55), housed on the wheel carrier (2), operatively connected to the drive shaft (51) and the rotation shaft (52) for the mutual transmission of rotary motion;
wherein the constant velocity joint (55) has a center of rotation (Cr) offset distally from said steering axis (S-S) ;
wherein the single-suspended-wheel-steering drive system (1) is **characterized by** the fact that the drive shaft (51) has a coupling end (515) operatively connected to the constant velocity joint (55) and a sliding end (510) operatively connected to the transmission means, wherein the drive group (5) comprises a transmission member (500), connectable to the transmission means, to which the sliding end (510) is operatively connected so as to be driven in rotation and supported in a predefined longitudinal sliding;
wherein the transmission member (500) comprises a bell-shaped element (580) drivable in rotation by the transmission means, identifying a bell cavity (580') housing the sliding end and a carriage element (581) operatively connected with the sliding end (510) and the bell-shaped element (580);
wherein the sliding end (510) is free to slide inside the bell-shaped element (580) and translates longitudinally with respect to said bell-shaped element (580) by means of the carriage element (581) along a shock absorber stroke (P) , as a function of the rotation of the wheel carrier (2).

2. System (1) according to claim 1, wherein the center of rotation (Cr) of the constant velocity joint (55) and the steering axis (S-S) identify an offset distance (D), wherein said offset distance (D) is greater than 5 millimeters.

3. System (1) according to claim 2, wherein the offset distance (D) is between 20 and 50 millimeters, preferably the offset distance (D) is 25 millimeters.

4. System (1) according to any of the preceding claims, wherein the wheel carrier group (2) has a steering angle (γ) with respect to the steering axis (S-S), starting from the rectilinear configuration, wherein the constant velocity joint (55) has a working angle (α), wherein the steering angle (γ) is greater than the working angle (α).

5. System (1) according to claim 4, wherein the steering angle (γ) is preferably greater than about 5° with respect to the working angle (α), preferably 4°.

6. System according to any of claims 4 or 5, wherein the working angle (α) is substantially about 50°, preferably 50°.

7. System (1) according to claim 1, wherein the sliding end (510) is free to slide along a steering stroke (S) that extends up to about 5 mm, preferably up to 5 mm.

8. System (1) according to any of the preceding claims, wherein the shock absorber group (3) comprises at least one upper arm (31) and at least one lower arm (32) engaged in rotation to the wheel carrier (2) by means of an upper hinge (310) and a lower hinge (320), wherein said steering axis (S-S) is passing through the centers of rotation of said upper hinge (310) and said lower hinge (320).

9. System (1) according to any of the preceding claims, wherein the wheel group, connected by a single-suspended-wheel-steering drive system (1), is at the front.

10. Tractor or garden tractor (900) comprising a single-suspended-wheel-steering drive system (1) according with any of the preceding claims.

11. Tractor or garden tractor (900) according to claim 10, wherein the single-suspended-wheel-steering drive system (1) is placed on the front axle.

## Patentansprüche

1. Antriebssystem (1) für Lenkung einzeln aufgehängter Räder bzw. Einzelradaufhängungslenkung-Antriebssystem (1), das mit einer Radgruppe eines Fahrzeugs (900) zur landwirtschaftlichen Verwendung verbindbar ist, wobei das Fahrzeug Bewegungsmittel mit Übertragungsmitteln aufweist, wobei das System (1) umfasst:
- einen Radträger (2) für die Radgruppe;
- eine Stoßdämpfergruppe (3) zur Abstützung und Stoßdämpfung des Radträgers (2), an die der Radträger (2) in Drehung um eine Lenkachse (S-S) gezwungen bzw. gebunden ist;
- eine Antriebsgruppe (5), die geeignet ist, die Bewegung, die durch die Übertragungsmittel des Fahrzeugs induziert wird, auf die Radgruppe zu übertragen, umfassend:
i) eine Antriebswelle (51), die operativ mit den Übertragungsmitteln des Fahrzeugs verbunden ist;
ii) eine Drehwelle (52) für die Drehung der Radgruppe;
iii) ein Gleichlaufgelenk (55), unterbracht an bzw. auf dem Radträger (2), das operativ mit der Antriebswelle (51) und der Drehwelle (52) zur gegenseitigen Übertragung der Drehbewegung verbunden ist;
wobei das Gleichlaufgelenk (55) ein Rotationszentrum (Cr) aufweist, das distal von der Lenkachse (S-S) versetzt ist;
wobei das Antriebssystem (1) für Lenkung einzeln aufgehängter Räder bzw. Einzelradaufhängungslenkung-Antriebssystem (1) **dadurch gekennzeichnet ist, dass** die Antriebswelle (51) ein mit dem Gleichlaufgelenk (55) operativ verbundenes Kopplungsende (515) und ein mit den Übertragungsmitteln operativ verbundenes Gleitende (510) aufweist, wobei die Antriebsgruppe (5) ein mit den Übertragungsmitteln verbindbares Übertragungsglied (500) umfasst, mit dem das Gleitende (510) operativ verbunden ist, um in Drehung versetzt zu werden und in einem vordefinierten Längsleiten gestützt zu werden;
wobei das Übertragungsglied (500) ein glockenförmiges Element (580) umfasst, das durch die Übertragungsmittel in Drehung versetzbar ist, und das einen Glockenhohlraum (580'), der das Gleitende aufnimmt, und ein Schlittenelement (581) identifiziert, das operativ mit dem Gleitende (510) und dem glockenförmigen Element (580) verbunden ist;
wobei das Gleitende (510) innerhalb des glockenförmigen Elements (580) frei gleiten kann und sich in Bezug auf das glockenförmige Element (580) mittels des Schlittenelements (581) entlang eines Stoßdämpferhubs (P) in Abhängigkeit von der Drehung des Radträgers (2) longitudinal verschiebt.

2. System (1) nach Anspruch 1, wobei das Drehzentrum (Cr) des Gleichlaufgelenks (55) und die Lenkachse (S-S) einen Versatzabstand (D) identifizieren, wobei der Versatzabstand (D) größer als 5 Millimeter ist.

3. System (1) nach Anspruch 2, wobei der Versatzabstand (D) zwischen 20 und 50 Millimeter beträgt, vorzugsweise der Versatzabstand (D) 25 Millimeter beträgt.

4. System (1) nach einem der vorhergehenden Ansprüche, wobei die Radträgergruppe (2) einen Lenkwinkel (γ) in Bezug auf die Lenkachse (S-S) aufweist, und zwar ausgehend von der geradlinigen Konfiguration, wobei das Gleichlaufgelenk (55) einen Arbeitswinkel (a) aufweist, wobei der Lenkwinkel (γ) größer als der Arbeitswinkel (a) ist.

5. System (1) nach Anspruch 4, wobei der Lenkwinkel (γ) vorzugsweise größer als etwa 5° in Bezug auf den Arbeitswinkel (a) ist, vorzugsweise 4°.

6. System nach einem der Ansprüche 4 oder 5, wobei der Arbeitswinkel (a) im Wesentlichen etwa 50°, vorzugsweise 50° beträgt.

7. System (1) nach Anspruch 1, wobei das Gleitende (510) frei entlang eines Lenkhubs (S) gleiten kann, der sich bis zu etwa 5 mm, vorzugsweise bis zu 5 mm erstreckt.

8. System (1) nach einem der vorhergehenden Ansprüche, wobei die Stoßdämpfergruppe (3) zumindest einen oberen Arm (31) und zumindest einen unteren Arm (32) umfasst, die mittels eines oberen Scharniers (310) und eines unteren Scharniers (320) in Drehung mit dem Radträger (2) in Eingriff sind, wobei die Lenkachse (S-S) durch das Drehzentrum des oberen Scharniers (310) und des unteren Scharniers (320) verläuft.

9. System (1) nach einem der vorhergehenden Ansprüche, wobei sich die Radgruppe, verbunden durch ein Antriebssystem (1) für Lenkung einzeln aufgehängter Räder bzw. Einzelradaufhängungslenkung-Antriebssystem (1), vorne befindet.

10. Traktor oder Gartentraktor (900), umfassend ein Antriebssystem (1) für Lenkung einzeln aufgehängter Räder bzw. Einzelradaufhängungslenkung-Antriebssystem (1) nach einem der vorhergehenden Ansprüche.

11. Traktor oder Gartentraktor (900) nach Anspruch 10, **dadurch gekennzeichnet, dass** das Antriebssystem (1) für Lenkung einzeln aufgehängter Räder bzw. Einzelradaufhängungslenkung-Antriebssystem (1) an der Vorderachse platziert ist.

## Revendications

1. Système d'entraînement de direction de roue suspendue unique (1) raccordable à un groupe de roues d'un véhicule (900) pour une utilisation agricole, dans lequel le véhicule a un moyen de mouvement comprenant un moyen de transmission, dans lequel le système (1) comprend :
- un porte-roue (2) pour le groupe de roues ;
- un groupe amortisseur (3) pour le support et l'amortissement du porte-roue (2), auquel le porte-roue (2) est contraint en rotation autour d'un axe de direction (S-S) ;
- un groupe d'entraînement (5) approprié pour transmettre le mouvement induit par le moyen de transmission du véhicule au groupe de roues comprenant :
i) un arbre d'entraînement (51) raccordé fonctionnellement au moyen de transmission du véhicule ;
ii) un arbre de rotation (52) pour la rotation du groupe de roues ;
iii) un joint homocinétique (55), logé sur le porte-roue (2), raccordé fonctionnellement à l'arbre d'entraînement (51) et à l'arbre de rotation (52) pour la transmission mutuelle d'un mouvement rotatif ;
dans lequel le joint homocinétique (55) a un centre de rotation (Cr) décalé distalement dudit axe de direction (S-S) ;
dans lequel le système d'entraînement de direction de roue suspendue unique (1) est **caractérisé par le fait que** l'arbre d'entraînement (51) a une extrémité de couplage (515) raccordée fonctionnellement au joint homocinétique (55) et une extrémité coulissante (510) raccordée fonctionnellement au moyen de transmission, dans lequel le groupe d'entraînement (5) comprend un organe de transmission (500), raccordable au moyen de transmission, auquel l'extrémité coulissante (510) est raccordée fonctionnellement de façon à être entraînée en rotation et supportée dans un coulissement longitudinal prédéfini ;
dans lequel l'organe de transmission (500) comprend un élément en forme de cloche (580) entrainable en rotation par le moyen de transmission, identifiant une cavité de cloche (580') logeant l'extrémité coulissante et un élément de chariot (581) raccordé fonctionnellement à l'extrémité coulissante (510) et à l'élément en forme de cloche (580) ;
dans lequel l'extrémité coulissante (510) est libre de coulisser à l'intérieur de l'élément en forme de cloche (580) et effectue une translation longitudinale vis-à-vis dudit élément en forme de cloche (580) au moyen de l'élément de chariot (581) le long d'une course d'amortisseur (P), en fonction de la rotation du porte-roue (2).

2. Système (1) selon la revendication 1, dans lequel le centre de rotation (Cr) du joint homocinétique (55) et l'axe de direction (S-S) identifient une distance de décalage (D), dans lequel ladite distance de décalage (D) est supérieure à 5 millimètres.

3. Système (1) selon la revendication 2, dans lequel la distance de décalage (D) est entre 20 et 50 millimètres, de préférence la distance de décalage (D) est de 25 millimètres.

4. Système (1) selon l'une quelconque des revendications précédentes, dans lequel le groupe porte-roue (2) a un angle de braquage (y) par rapport à l'axe de direction (S-S), à partir de la configuration rectiligne, dans lequel le joint homocinétique (55) a un angle de travail (a), dans lequel l'angle de braquage (y) est supérieur à l'angle de travail (α).

5. Système (1) selon la revendication 4, dans lequel l'angle de braquage (y) est de préférence supérieur à environ 5° par rapport à de l'angle de travail (α), de préférence 4°.

6. Système selon l'une quelconque des revendications 4 ou 5, dans lequel l'angle de travail (a) est sensiblement d'environ 50°, de préférence de 50°.

7. Système (1) selon la revendication 1, dans lequel l'extrémité coulissante (510) est libre de coulisser le long d'une course de direction (S) qui s'étend jusqu'à environ 5 mm, de préférence jusqu'à 5 mm.

8. Système (1) selon l'une quelconque des revendications précédentes, dans lequel le groupe amortisseur (3) comprend au moins un bras supérieur (31) et au moins un bras inférieur (32) engagés en rotation avec le porte-roue (2) au moyen d'une charnière supérieure (310) et d'une charnière inférieure (320), dans lequel ledit axe de direction (S-S) passe par les centres de rotation de ladite charnière supérieure (310) et de ladite charnière inférieure (320).

9. Système (1) selon l'une quelconque des revendications précédentes, dans lequel le groupe de roues, raccordé par un système d'entraînement de direction de roue suspendue unique (1), se trouve à l'avant.

10. Tracteur ou tracteur de jardin (900) comprenant un système d'entraînement de direction de roue suspendue unique (1) selon l'une quelconque des revendications précédentes.

11. Tracteur ou tracteur de jardin (900) selon la revendication 10, dans lequel le système d'entraînement de direction de roue suspendue unique (1) est placé sur l'essieu avant.
